# EUROPEAN PATENT SPECIFICATION

(11) **EP 2 749 161 B1**
(45) Date of publication and mention of the grant of the patent: **31.01.2018**
(21) Application number: 13796767.5
(22) Date of filing: 14.05.2013
(51) Int. Cl.: A01K 87/04

(54) **FISHING LINE GUIDE**
ANGELSCHNURFÜHRUNG
GUIDAGE DE LIGNE DE PÊCHE

(30) Priority: 30.05.2012 JP 2012123150
(43) Date of publication of application: 02.07.2014
(73) Proprietor: Globeride, Inc., Higashikurume-shi Tokyo 203-8511 (JP)
(72) Inventor: AKIBA, Masaru, Higashikurume-shi Tokyo 203-8511 (JP); TAKAMATSU, Nobuaki, Higashikurume-shi Tokyo 203-8511 (JP); WATANABE, Masayuki, Higashikurume-shi Tokyo 203-8511 (JP)
(74) Representative: Boult Wade Tennant
(86) International application number: PCT/JP2013/063346
(87) International publication number: WO 2013/179885

(56) References cited:
- GB-A- 2 260 471
- JP-A- 2010 130 987
- JP-A- 2012 029 606
- JP-A- 2012 075 362
- JP-A- 2012 075 375
- JP-U- S53 150 792

## Description

### Technical Field

The present invention relates to a fishing line guide for guiding a fishing line along an extension direction of a fishing rod.

This application claims priority from Japanese Patent Application No. 2012-123150 (filed May 30, 2012), the entire contents of which are hereby incorporated by reference herein.

### Background Art

Japanese Unexamined Patent Application Publication No. 2011-67165 (PTL 1) describes a commonly known fishing line guide. The fishing line guide disclosed in PTL 1 includes a guide ring through which a fishing line passes, and a frame that holds the guide ring. The frame is integrally formed of a metal such as titanium and stainless steel. JP 2010 130987 A relates to a fishing line guide.

### Citation List

### Patent Literature

PTL 1: Japanese Unexamined Patent Application Publication No. 2011-67165

### Summary

### Technical Problem

However, according to the fishing line guide disclosed in PTL 1, the frame that accounts for a large part of the fishing line guide is formed of a metal, and thus it is difficult to reduce the weight of the fishing line guide due to the weight of the frame. To solve this problem, a technique for integrally forming the frame with a resin that is lighter than the metal has been considered. Still, the frame that is formed of a resin has a smaller rigidity than the frame that is formed of a metal. As such, it is required to increase the volume of the frame that is formed of a resin in order to ensure a sufficient rigidity (strength). When casting such a fishing rod, the frame is subject to a large air resistance and generates considerable wind noise.

An object of various embodiments of the present invention is to provide a fishing line guide that is reduced in size and weight.

### Solution to Problem

According to an aspect of the present invention, a fishing line guide is according to claim 1.

According to a reference example, a fishing rod includes a fishing rod main body, and a fishing line guide mounted on the fishing rod main body, in which the fishing line guide includes a plate-shaped frame member formed of fiber-reinforced plastic and having an engagement hole and a guide hole through which a fishing line passes formed therein, and a hollow supporting member formed of a resin, having a through-hole through which the fishing rod main body passes formed therein, and engaged with the engagement hole, in which a first abutting surface extending in a direction crossing an extension direction of the through-hole, abutting against a front surface of the frame member, and formed of a welded resin and a second abutting surface extending in the direction crossing the extension direction and abutting against a back surface of the frame member are formed in the supporting member.

### Advantageous Effects of Invention

According to the present embodiment, it is possible to provide a fishing line guide that is reduced in size and weight.

### Brief Description of Drawings

Fig. 1 is a sectional view illustrating a configuration of a fishing line guide according to an embodiment of the present invention.
Fig. 2 is a view illustrating the fishing line guide of Fig. 1 viewed from a back surface side.
Fig. 3 is a sectional view showing a method for manufacturing the fishing line guide illustrated in Figs. 1 and 2.

### Description of Embodiments

Hereinafter, various embodiments will be described with reference to the accompanying drawings. The same reference numerals are applied to the same elements in the drawings. In addition, for convenience, each of the drawings may not necessarily be illustrated in the same scale.

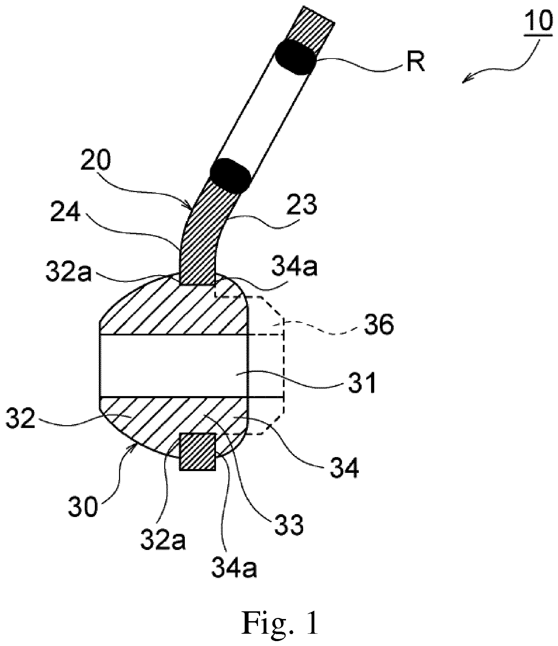

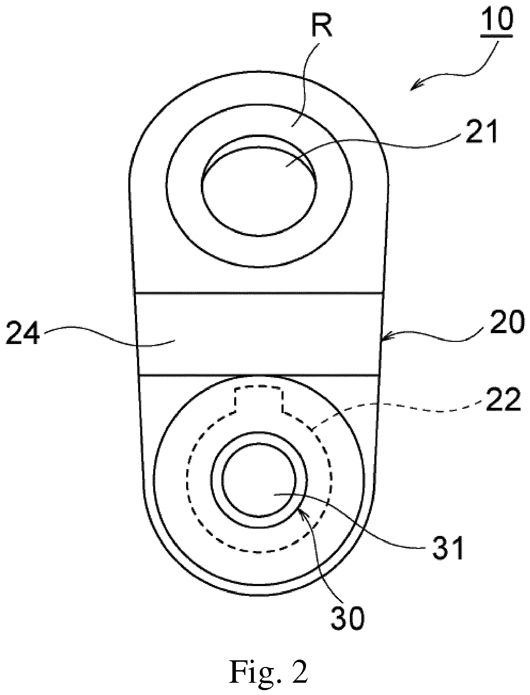

Fig. 1 is a sectional view illustrating a configuration of a fishing line guide according to an embodiment of the present invention. Fig. 2 is a view illustrating the fishing line guide of Fig. 1 viewed from a back surface side. As illustrated in Figs. 1 and 2, a fishing line guide 10 according to this embodiment may include a frame member 20 and a supporting member 30 that may support the frame member 20 and may be mounted on a fishing rod main body (not illustrated).

The frame member 20 may be formed to have a plate-like overall shape. A guide hole 21 through which a fishing line may pass may be formed at an upper side of the frame member 20. An annular guide ring R may be inserted into and fixed to the guide hole 21. The guide ring R may be formed of a material such as titanium, aluminum, SUS, and ceramics.

An engagement hole 22 may be formed at a lower side of the frame member 20. The engagement hole 22 may allow the supporting member 30 to be inserted The engagement hole 22 may have any shape. As an example, in this embodiment, the engagement hole 22 may have a shape in which a circle and a convex portion that may project to an outer side on a circumference of the circle may be combined

In addition, the frame member 20 may have a substantially V-like cross-sectional shape by, for example, being bent at a middle part, that is, a part between the guide hole 21 and the engagement hole 22. In other words, the frame member 20 may be bent at the middle part such that the part including the guide hole 21 may be inclined (inclined forward) toward a front side (top side) of the fishing rod main body (not illustrated).

Furthermore, one or a plurality of holes, notches, or the like may be formed at any part of the frame member 20, for example, the middle part, for reduction in weight.

The above-described frame member 20 can have a laminated structure, for example. In other words, the frame member 20 can have a laminated structure in which a plurality of prepreg sheets, each of which may extend in an extension direction of the frame member 20, may be laminated. Each of the prepreg sheets may be a sheet in which reinforced fibers such as carbon fibers and glass fibers may be aligned in a predetermined direction and may be impregnated with a thermosetting resin, a thermoplastic resin, or the like.

Next, the supporting member 30 may have a hollow serving as a through-hole 31 through which the fishing rod main body (not illustrated) may pass. As an example, in this embodiment, the supporting member 30 may have a tubular shape. The supporting member 30 may support the frame member 20 by being engaged with the engagement hole 22 of the frame member 20.

Specifically, the supporting member 30 has a rear side part 32 that extends backward (to grip side) from the engagement hole 22 of the frame member 20, an engagement part 33 that may be formed in one piece with the rear side part 32 and is inserted into the engagement hole 22 to fill the engagement hole 22, and a front side part 34 that may be formed in one piece with the engagement part 33 and extends forward (to top side) from the engagement hole 22.

The front side part 34 may have a first abutting surface 34a that may extend in a direction crossing an extension direction of the through-hole 31 (that is, the extension direction of the fishing rod main body) and may abut against a front surface 23 of the frame member 20. Herein, the front surface 23 of the frame member 20 may extend substantially perpendicular to the extension direction of the through-hole 31, and thus the first abutting surface 34a may also extend substantially perpendicular to the extension direction of the through-hole 31. In addition, the first abutting surface 34a may extend along a circumferential direction of the through-hole 31. In other words, the first abutting surface 34a may extend annularly.

In a case where the front surface 23 of the frame member 20 is inclined forward or backward instead of extending substantially perpendicular to the extension direction of the through-hole 31, the first abutting surface 34a can also be inclined forward or backward in the same manner to be capable of abutting against the front surface 23.

The rear side part 32 may have a second abutting surface 32a that may extend in the direction crossing the extension direction of the through-hole 31 (that is, the extension direction of the fishing rod main body) and may abut against a back surface 24 of the frame member 20. Herein, the back surface 24 of the frame member 20 may extend substantially perpendicular to the extension direction of the through-hole 31, and thus the second abutting surface 32a may also extend substantially perpendicular to the extension direction of the through-hole 31. In addition, the second abutting surface 32a may extend along the circumferential direction of the through-hole 31. In other words, the second abutting surface 32a may extend annularly.

In a case where the back surface 24 of the frame member 20 is inclined forward or backward instead of extending substantially perpendicular to the extension direction of the through-hole 31, the second abutting surface 32a can also be inclined forward or backward in the same manner to be capable of abutting against the back surface 24.

The first abutting surface 34a of the front side part 34 and the second abutting surface 32 of the rear side part 32 may respectively abut against (press) the front surface 23 and the back surface 24 of the frame member 20 with the frame member 20 being pinched between both thereof such that the frame member 20 can be fixed and supported

In particular, in a case where the frame member 20 has the laminated structure in which the plurality of prepreg sheets may be laminated as described above, the frame member 20 may be bent as, for example, the fishing line that may be pulled out from a reel (not illustrated) and guided by the guide ring R may come into contact with the guide ring R or as a user may cast the fishing rod main body. When the frame member 20 is bent, it is inevitable that the prepreg sheets forming the laminated structure of the frame member 20 are subject to a force for which each of the prepreg sheets may be relatively displaced and peeled off from adjacent prepreg sheets. However, the peeling force may be suppressed since the first abutting surface 34a and the second abutting surface 32a respectively press and fix the front surface 23 and the back surface 24 of the frame member 20. In this manner, a situation in which delamination fracture may be caused by bending of the frame member 20 may be suppressed

As described above, the engagement hole 22 of the frame member 20 may have the shape in which the circle and the convex portion that may project to the outer side on the circumference of the circle may be combined. The engagement hole 22 may be filled by the engagement part 33 of the supporting member 30 which may be inserted into the engagement hole 22. Accordingly, the engagement part 33 may have the shape in which the circle and the convex portion that may project to the outer side on the circumference of the circle may be combined as is the case with the engagement hole 22. The convex portion of the engagement part 33 may prevent the frame member 20 from pivoting along a circumferential direction of the fishing rod main body (not illustrated).

From a viewpoint of preventing the frame member from pivoting along the circumferential direction of the fishing rod main body (not illustrated), the engagement hole 22 of the frame member 20, that is, the engagement part 33 of the supporting member 30 may have a shape in which a circle and a concave portion that may be recessed to an inner side on a circumference of the circle may be combined or may be formed into a rectangular shape or a polygonal shape.

The supporting member 30 can be formed of any resin containing epoxy or the like.

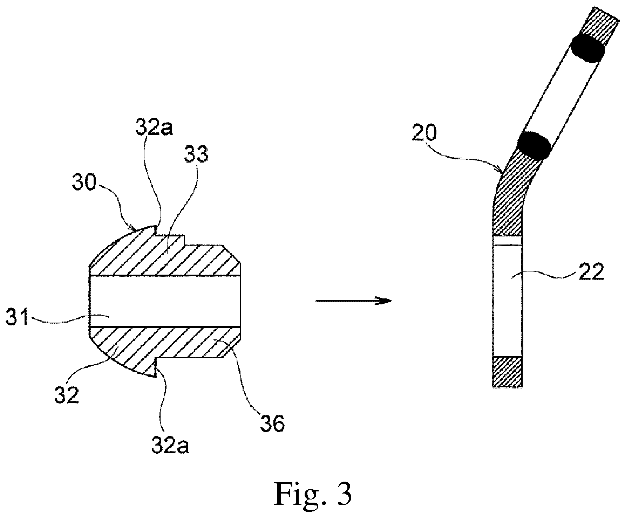

Next, a method for manufacturing the fishing line guide will be described with reference to Fig. 3 as well as Figs. 1 and 2. Fig. 3 is a sectional view showing the method for manufacturing the fishing line guide illustrated in Figs. 1 and 2.

First, the supporting member 30 illustrated in Fig. 3 may be prepared The supporting member 30 may have the same rear side part 32 and the same engagement part 33 as illustrated in Fig. 1, but may have a front side part 36 which may be different from the front side part 34 illustrated in Fig. 1. In other words, the rear side part 36 illustrated in Fig. 3 may have an outer diameter that may be smaller than a diameter of the engagement hole 22 so as to be capable of passing through the engagement hole 22 of the frame member 20. Furthermore, the rear side part 36 may be formed to be longer than the rear side part 34 in the extension direction of the through-hole 31.

The frame member 20 illustrated in Fig. 3 may be mounted on the supporting member 30 illustrated in Fig. 3. The frame member 20 illustrated in Fig. 3 may be the same as that illustrated in Figs. 1 and 2.

First, the front side part 36 of the supporting member 30 may pass through the engagement hole 22 of the frame member 20 and the engagement part 33 of the supporting member 30 is inserted into the engagement hole 22 such that the engagement hole 22 may be filled In this state, the second abutting surface 32a of the rear side part 32 (of the supporting member 30) abuts against the back surface 24 of the frame member 20.

Then, the front side part 36 that is formed of a resin may be welded through a welding process. Specifically, welding may be performed such that a front side (top side) part of the front side part 36 may flow toward a rear side (grip side), that is, toward the front surface 23 of the frame member 20. In this manner, the front side part 36 may be changed in shape to become the front side part 34 illustrated in Fig. 1. An outer surface of the front side part 34 becomes rougher than an outer surface of the rear side part 32 since the front side part 34 is formed of a welded resin. In other words, it can be said that the outer surface of the front side part 34 is more roughened than the outer surface of the rear side part 32. In this state, the first abutting surface 34a of the front side part 34 abuts against the front surface 23 of the frame member 20 to press the front surface 23 as described above.

Any welding techniques can be applied to this embodiment, including heat welding, ultrasonic welding, vibration welding, induction welding, high frequency welding, semiconductor laser welding, and spin welding.

The fishing line guide 10 according to this embodiment that may be manufactured in this manner can be mounted on any fishing rod such as a jointed rod And a telescopic rod. In a case where the fishing line guide 10 is mounted on the jointed rod, the fishing line guide 10 can be fixed to the jointed rod by applying an adhesive to an inner wall surface of the through-hole 31 of the supporting member 30.

In a case where the fishing line guide 10 is mounted on the telescopic rod, it may be necessary that the fishing line guide 10 be disposed in a removable manner on the telescopic rod The user may slide the fishing line guide 10 toward the grip side after passing the telescopic rod, an outer diameter of which may gradually increase from the top side toward the grip side, through the through-hole 31. In this case, the user may grip the front side part 34 of the supporting member 30. Since the outer surface of the front side part 34 is roughened, the user can have a reliable grip on the supporting member 30. Furthermore, when the user may slide the fishing line guide 10 toward the grip side, the fishing line guide 10 cannot move to the grip side from a part of an outer surface of the telescopic rod which may have an outer diameter larger than an inner diameter of the through-hole 31. In this state, the user may firmly engage the through-hole 31 and the telescopic rod with each other by pressing the fishing line guide 10 to the grip side. In this manner, the fishing line guide 10 may be temporarily fixed at this part. In addition, when the fishing line guide 10 may be pressed to the grip side, the user may press the front side part 34 of the supporting member 30 toward the grip side. Since the outer surface of the front side part 34 is roughened, the user can press the front side part 34 to the grip side with ease and reliability without having to slide a finger on the outer surface. Then, the user may remove the fishing line guide 10 from the telescopic rod by sliding the fishing line guide 10 toward the top side.

In this manner, according to this embodiment, the frame member that may determine performance of the fishing line guide may be formed of not metal but fiber-reinforced plastic. As such, the weight of the fishing line guide can be reduced with reliability. In addition, the frame member that may be formed of the fiber-reinforced plastic can ensure a sufficient rigidity (strength), and thus no increase in volume may be required Accordingly, the fishing line guide may be reduced in size.

Furthermore, the frame member may be supported, in a state where the front surface and the back surface may be pressed, by the supporting member that may support the frame member and fix the frame member to the fishing rod main body. In this manner, a situation in which the frame member may be bent so as to cause occurrence of delamination-fracture can be suppressed in a case where the frame member has the laminated structure in which the plurality of prepreg sheets may be laminated Moreover, since both the front surface and the back surface of the frame member may be supported in a state where the front surface and the back surface may be pressed by the abutting surface of the supporting member which may extend annularly, the situation in which the frame member may be delamination-fractured can be even more reliably suppressed

As described above, according to this embodiment, it is possible to provide the fishing line guide that may be reduced in size and weight.

### Reference Signs List

- 10: FISHING LINE GUIDE
- 20: FRAME MEMBER
- 22: ENGAGEMENT HOLE
- 23: FRONT SURFACE
- 24: BACK SURFACE
- 30: SUPPORTING MEMBER
- 31: THROUGH-HOLE
- 32: REAR SIDE PART
- 32a: SECOND ABUTTING SURFACE
- 33: ENGAGEMENT PART
- 34: FRONT SIDE PART
- 34a: FIRST ABUTTING SURFACE
- 36: FRONT SIDE PART

## Claims

1. A fishing line guide (10) comprising:
a plate-shaped frame member (20) formed of fiber-reinforced plastic, the frame member (20) having an engagement hole (22) and a guide hole through which a fishing line passes; and
a hollow supporting member (30) engaged with the engagement hole (22), the supporting member (30) having a through-hole (31) through which a fishing rod passes,
wherein the supporting member (30) includes:
a first abutting surface (34a) extending in a direction crossing an extension direction of the through-hole (31), the first abutting surface (34a) being formed so as to abut against a front surface (23) of the frame member (20);
a second abutting surface (32a) extending in the direction crossing the extension direction, the second abutting surface (32a) abutting against a back surface (24) of the frame member (20);
a rear side part (32) extending backward from the engagement hole (22) of the frame member (20);
an engagement part (33) inserted into the engagement hole (22) to fill the engagement hole (22); and
a front side part (34, 36) extending forward from the engagement hole (22) **characterised in that** the hollow supporting member (30) is formed of a resin, that the first abutting surface (34a) is formed of a welded resin, and that the front side part (34, 36) contains a welded resin to have an outer surface rougher than an outer surface of the rear side part (32).

2. The fishing line guide (10) according to Claim 1,
wherein the engagement hole (22) of the frame member (20) has a shape in which a circle and a convex portion projecting to an outer side on a circumference of the circle are combined.

3. The fishing line guide (10) according to Claim 1 or Claim 2,
wherein the first abutting surface (34a) and the second abutting surface (32a) extend annularly.

4. The fishing line guide (10) according to any one of Claims 1 to 3,
wherein the frame member (20) is formed from a plurality of plate-shaped laminated members.

## Patentansprüche

1. Angelschnurführung (10) folgendes aufweisend:
ein aus faserverstärktem Kunststoff gebildetes plattenförmiges Rahmenelement (20), wobei das Rahmenelement (20) ein Eingriffsloch (22) und ein Führungsloch aufweist, durch welche eine Angelschnur hindurchläuft; und
ein mit dem Eingriffsloch (22) in Eingriff gebrachtes hohles Stützelement (30), wobei das Stützelement (30) ein Durchgangsloch (31) aufweist, durch das eine Angel hindurchläuft,
wobei das Stützelement (30) folgendes aufweist:
eine erste Auflagefläche (34a), die sich in einer eine Erstreckungsrichtung des Durchgangslochs (31) kreuzenden Richtung erstreckt, wobei die erste Auflagefläche (34a) so geformt ist, dass sie an einer Vorderseite (23) des Rahmenelements (20) anliegt;
eine zweite Auflagefläche (32a), die sich in der die Erstreckungsrichtung kreuzenden Richtung erstreckt, wobei die zweite Auflagefläche (32a) an einer Rückseite (24) des Rahmenelements (20) anliegt;
einen hinteres Seitenteil (32), das sich von Eingriffsloch (22) des Rahmenelements (20) aus nach hinten erstreckt;
ein in das Eingriffsloch (22) eingesetztes Eingriffsteil (33) zum Ausfüllen des Eingriffslochs (22); und
eine vorderes Seitenteil (34, 36), das sich vom Eingriffsloch aus nach vorne erstreckt, **dadurch gekennzeichnet, dass** das hohle Stützelement (30) aus einem Harz geformt ist, dass die erste Auflagefläche (34a) aus einem geschweißtem Harz geformt ist, und dass das vordere Seitenteil (34, 36) ein geschweißtes Harz enthält, um eine Außenfläche aufzuweisen, die rauer ist als eine Außenfläche des hinteren Seitenteils (32).

2. Angelschnurführung (10) nach Anspruch 1,
wobei das Eingriffsloch (22) des Rahmenelements (20) eine Form aufweist, in der ein kreisrundes und ein konvexes Teil, die auf einem Umfang des Kreises hin zu einer Außenseite emporstehen, kombiniert sind.

3. Angelschnurführung (10) nach Anspruch 1 oder Anspruch 2,
wobei sich die erste Auflagefläche (34a) und die zweite Auflagefläche (32a) ringförmig erstrecken.

4. Angelschnurführung (10) nach einem der Ansprüche 1 bis 3,
wobei das Rahmenelement (20) aus einer Vielzahl von plattenförmigen laminierten Elementen geformt ist.

## Revendications

1. Guide pour ligne de pêche (10) comprenant :
un élément de cadre en forme de plaque (20) formé en matière plastique renforcée de fibres, l'élément de cadre (20) ayant un trou d'engagement (22) et un trou de guidage à travers lequel passe une ligne de pêche ; et
un élément de support creux (30) venant en prise avec le trou d'engagement (22), l'élément de support (30) ayant un trou traversant (31) à travers lequel passe une canne à pêche,
dans lequel l'élément de support (30) comporte :
une première surface de butée (34a) s'étendant dans une direction croisant une direction d'extension du trou traversant (31), la première surface de butée (34a) étant formée de manière à venir en butée contre une surface avant (23) de l'élément de cadre (20) ;
une deuxième surface de butée (32a) s'étendant dans la direction croisant la direction d'extension, la deuxième surface de butée (32a) venant en butée contre une surface arrière (24) de l'élément de cadre (20) ;
une partie latérale arrière (32) s'étendant vers l'arrière à partir du trou d'engagement (22) de l'élément de cadre (20) ;
une partie d'engagement (33) insérée dans le trou d'engagement (22) pour remplir le trou d'engagement (22) ; et
une partie latérale avant (34, 36) s'étendant vers l'avant à partir du trou d'engagement (22) ;
**caractérisé en ce que** l'élément de support creux (30) est formé d'une résine, **en ce que** la première surface de butée (34a) est formée d'une résine soudée, et **en ce que** la partie latérale avant (34, 36) contient une résine soudée pour avoir une surface extérieure plus rugueuse qu'une surface extérieure de la partie latérale arrière (32).

2. Guide pour ligne de pêche (10) selon la revendication 1,
dans lequel le trou d'engagement (22) de l'élément de cadre (20) a une forme dans laquelle un cercle et une partie convexe faisant saillie sur un côté extérieur sur une circonférence du cercle sont combinés.

3. Guide pour ligne de pêche (10) selon la revendication 1 ou 2,
dans lequel la première surface de butée (34a) et la deuxième surface de butée (32a) s'étendent de manière annulaire.

4. Guide pour ligne de pêche (10) selon l'une quelconque des revendications 1 à 3,
dans lequel l'élément de cadre (20) est formé d'une pluralité d'éléments stratifiés en forme de plaque.
